Europäisches Patentamt

European Patent Office

Office européen des brevets

(11) Publication number: **0 344 550 B1**

(12) **EUROPEAN PATENT SPECIFICATION**

(45) Date of publication of patent specification: **08.12.93**    (51) Int. Cl.5: **C08K 5/00**, //(C08K5/00,5:13, 5:52)

(21) Application number: **89109101.9**

(22) Date of filing: **19.05.89**

(54) Method for stabilizing polymer materials, stabilizer composition therefor and stabilized polymer materials.

(30) Priority: **31.05.88 CS 3718/88**

(43) Date of publication of application:
**06.12.89 Bulletin 89/49**

(45) Publication of the grant of the patent:
**08.12.93 Bulletin 93/49**

(84) Designated Contracting States:
**AT CH DE FR GB IT LI**

(56) References cited:
**DE-A- 3 410 770**

**CHEMICAL ABSTRACTS, vol. 107, no. 19, 9th November 1987, page 46, abstract no. 177166n, Columbus, Ohio, US; & CS-A-235 169 (A. HUMPLIK et al.) 12-02-1987 (Cat. D)**

(73) Proprietor: **VUCHT a.s.**
**Nobelova 34**
**Bratislava(SK)**

(72) Inventor: **Humplik, Antonin, Dipl.-Ing.**
**Saburovova 16**
**Bratislava(CS)**
Inventor: **Bencková, Mária, Dipl.-Ing.**

**Karadzicova 33**
**Bratislava(CS)**
Inventor: **Caucik, Pavol, Dipl.-Ing.**
**Salviová 26**
**Bratislava(CS)**
Inventor: **Durmis, Julius, Dipl.-Ing.**
**Ozvoldikova 5**
**Bratislava(CS)**
Inventor: **Göghová, Marcela, Dr. rer. nat.**
**Zikova 6**
**Bratislava(CS)**
Inventor: **Karvas, Milan, Dipl.-Ing.**
**Gajova 15**
**Bratislava(CS)**
Inventor: **Orlik, Ivo, Dipl.-Ing.**
**Astrová 14**
**Bratislava(CS)**
Inventor: **Povazancova, Marta, Dipl.-Ing.**
**Tbiliská 23**
**Bratislava(CS)**

Rank Xerox (UK) Business Services
(3.10/3.6/3.3.1)

(74) Representative: **Patentanwälte Beetz - Timpe - Siegfried Schmitt-Fumian - Mayr Steinsdorfstrasse 10 D-80538 München (DE)**

## Description

This invention relates to a method for stabilizing polymer materials, a stabilizer composition therefor, especially for polyolefines and stabilized polymer materials.

Polymer materials must be protected against thermooxidative degradation during processing, storage and use, which occurs under the influence of factors, such as mechanical and thermal strain, UV radiation, air oxygen and the like, as a consequence of the scission of polymer chains and following oxidation of fragments formed, or melting, and leads to a change of physico-mechanical properties of the polymer material. According to the prior art, mostly sterically hindered phenols and phosphites are used as stabilizers.

Known stabilizers such as 2,6-di-t-butyl-4-methylphenol and 2-t-butyl-4-(-$\alpha$,$\alpha'$dimethylbenzyl)-phenol (CS-A-235 169) exhibit high efficiency during processing of the polymers; because of their relatively high volatility at higher processing temperatures, the applicability is restricted. High molecular phenolic antioxidants are less efficient at comparable concentrations. Furthermore, both groups of stabilizers can result in an undesirable colouring of the polymer. Phosphite stabilizers offer a relatively good processing and thermooxidation stability, however, their considerable hydrolyzability and problems associated therewith at processing and storage are disadvantageous. Low-molecular types are liquid, and in the course of their application yellowing can occur. Higher-molecular types based on pentaerythritol, described in CS-A-191 331 and CS-A-211 116 do not lead to these drawbacks, but increase the costs for such a stabilization system.

It is well known that in some cases the combination of various types of stabilizers leads to a mutual interaction of the respective components of such a stabilization system. Extraordinary attention is paid in the research especially to synergistic effects allowing a decrease of the costs for polymers stabilization and an extension of the service life of goods made of these stabilized plastics. US-A-3 535 249 describes an antioxidation mixture for polyolefins comprising a phenolic antioxidant, a deactivator of the action of heavy metals and a reducing agent. Vulcanizates made of unsaturated rubbers can be stabilized by a synergistic combination of 2-mercaptobenzimidazole with a phenolic or amine antioxidant (CS-A-165 480, CS-A-244 977).

There are also well known multicomponent stabilizer systems based on phenolic and phosphite antioxidants which may also comprise costabilizers. For example, GB-B-1 526 603 relates to the preparation and application of bis(dialkylphenyl)-pentaerythritoldiphosphites together with phenolic antioxidants. JP 58142924, JP 59080452, JP 61133251, CS-A-190 837 and EP 184 191 deal with multicomponent stabilizer systems comprising phenolic and phosphite stabilizers.

The invention is based on the finding that a significant improvement in polymer stabilization as compared with prior art systems can be achieved by a stabilizer composition for polymer materials based on a specific alkylated aralkylphenol, 2-t-butyl-4-($\alpha$,$\alpha'$-dimethylbenzyl)-phenol, and a specific bis-(aralkylphenyl)-pentaerythritoldiphosphite, bis(2-t-butyl-4-($\alpha$,$\alpha'$-dimethylbenzyl)-phenyl)-pentaerythritoldiphosphite.

It is the object of the present invention to provide a method and a stabilizer composition for stabilizing polymer materials and particularly polyolefins, and the respective stabilized polymer materials.

The above object is achieved according to the claims. The dependent claims relate to preferred embodiments.

The stabilizer composition for polymer materials according to the invention consists of an alkylated aralkylphenol and a bis(aralkylphenyl)-pentaerythritoldiphosphite and is characterized in that it consists of

(A) 2-t-butyl-4-($\alpha$,$\alpha'$dimethylbenzyl)-phenol and
(B) bis-(2-t-butyl-4-($\alpha$,$\alpha'$-dimethylbenzyl)-phenyl)-pentaerythritoldiphosphite.

According to a preferred embodiment, the stabilizer composition consists of 0.5 to 50 mass-% of component A and 99.5 to 50 mass-% of component B, the sum of the percentages of components A and B being 100 mass-%.

The stabilized polymer material according to the invention comprise the stabilizer composition of components A and B, preferably in an amount of 0.01 to 1.0 mass-% and particularly of 0.05 to 0.5 mass-%, based on the mass of the basic polymer material to be stabilized.

In accordance with the above, the method of the invention for stabilizing polymer materials is characterized by introducing the above stabilizer composition in the form of a mixture or in the form of the separate components A and B, in the respective proportions, into the polymer material to be stabilized or into the corresponding polymerization or monomor or prepolymer mixture.

The above stabilizer composition is added to the polymerization system or to the polymer material to be stabilized, preferably in an amount of 0.01 to 1.0 mass-%, based on the mass of the basic polymer

3

material to be stabilized.

The best results are obtained within a concentration range of from 0.05 to 0.5 mass-% of the stabilizer composition, based on the mass of the basic polymers.

The stabilizer compositions according to the invention are particularly suited for the stabilization of polyolefins.

By the combination of the stabilizer components A and B which are easily available, the stabilizer composition has a considerably higher efficiency than the sum of the efficiencies provided by the separate components A and B, corresponding to a considerable synergistic effect. Because of that, the stabilizer composition according to this invention ensures a high stability of polymer materials during processing and use and is characterized by a significantly lower volatility and hydrolyzability as compared with commonly used stabilizers, and an effective protection of polymers against colouring.

The stabilization effect of the stabilizer composition according to this invention is, at the same dosage far superior to the stabilization effect of known stabilizers based on pentaerythritole. The components of this composition are non-toxic; they can be obtained from easily available raw materials, which may be obtained by reprocessing of technological wastes.

According to this invention the composition can be introduced into the polymer substrate in the form of the separate components in the corresponding proportion, or in the form of a mixture of components A and B, prepared by preceding mixing of the components in the respective proportions. This stabilizer composition can be applied separately or in combination with other stabilizers and/or additives, such as antioxidants, light stabilizers, UV stabilizers, pigments, fillers, flame retarders and the like.

According to this invention, the stabilizer composition or its components can be added to the polymer directly or at the stage of production of the polymer or at its processing using common processing methods.

The polymers stabilized by the composition according to this invention can be processed in the usual manner, e.g. by extrusion, injection moulding, rolling, moulding, blow forming and the like, into such products as fibers, sheets, tapes, panels, pipes, covers or coatings on suitable basic substrates, and the like.

The following examples illustrate the invention.

**Example 1**

Stabilizer compositions were prepared from 2-t-butyl-4-($\alpha,\alpha'$-dimethylbenzyl)-phenol (A) and bis(2-t-butyl-4-($\alpha, \alpha'$-dimethylbenzyl)-phenyl)-pentaerythritoldiphosphite (B) according to the formulations of Table 1.

Table 1

| | Stabilizer composition No. | | | | |
|---|---|---|---|---|---|
| | 1 | 2 | 3 | 4 | 5 |
| Component A (mass-%) | 100 | 75 | 50 | 25 | 0 |
| Component B (mass-%) | 0 | 25 | 50 | 75 | 100 |

From a powdery polypropylene (melt flow index 8 g/10 min at 230 °C, content of isotactic proportion 92.2 mass-%) were prepared mixtures containing the above stabilizer compositions in an amount of 0.1 mass-%, based on the mass of the polymer, and containing always additional 0.1 mass-% of Ca-stearate. The mixtures were prepared by means of a planet mixer (planet mixer of Plasticorder Brabender PLE 331). The stability of the obtained mixtures and the stabilization efficiency of the stabilizer compositions used was measured by detecting the change of the melt flow index (MFI) at 230 °C after multiple extrusion (through the extruder of Plasticorder Brabender PLE 331; D = 19 mm; L/D = 25; temperatures 230 °C/240 °C/250 °C/260 °C, at 300 min$^{-1}$). The change of the colour of the polymer after the extrusion was measured for sheets with a thickness of 0.5 mm, prepared by moulding at a temperature of 260 °C for 5 min, after preceding homogenization in a nitrogen atmosphere at a temperature of 180 °C for 5 min, on a Leukometer Zeiss, Jena, by determining the reflection coefficient, $R_{FM}$ ($\lambda_{max}$ = 459 nm, and blue filter). The values of the melt flow index (MFI) (g/10 min, measured at 230 °C) and the values of $R_{FM}$ are summarized in Table 2.

Table 2

| Stabilizer composition No. | After 1 transition | | after 5 transitions | |
|---|---|---|---|---|
| | MFI | $R_{FM}$ | MFI | $R_{FM}$ |
| (no stabilizer) | 21.2 | 77.0 | 53.2 | 74.2 |
| 1 | 14.2 | 77.2 | 25.2 | 76.5 |
| 2 | 11.3 | | 16.2 | |
| 3 | 10.2 | 78.7 | 14.6 | 78.0 |
| 4 | 9.6 | | 12.8 | |
| 5 | 10.5 | 77.4 | 14.9 | 77.2 |

The data of Table 2 show the synergistic effect of the stabilizer compositions in question which is most significant at a ratio of the components A:B of 1:3.

**Example 2**

A powdery polypropylene (melt flow index 10.4 g/min at 230 °C) stabilized by 0.25 mass-% of the stabilizers listed below and containing always 0.1 mass-% of Ca-stearate was exposed to thermooxidative degradation in the measuring mixer W50H of Plasticorder Brabender PLE 331 at a temperature of 180 °C with access of air at 50 min$^{-1}$ The time necessary for a decrease of the relative viscosity of the polymers to its half value, $_{1/2}$(min),was measured. The results obtained are summarized in Table 3.

Table 3

| Stabilization system | $\tau_{1/2}$ (min) |
|---|---|
| (no stabilizer) | 22 |
| Component A alone | 186 |
| Component B alone | 230 |
| Stabilizer composition A + B (ratio A:B 1:1) | 360 |
| Bis(2,4-di-t-butylphenyl)-pentaerythritoldiphosphite) | 223 |

**Example 3**

A polypropylene copolymer was compounded with 0.05 mass-% of the stabilizers listed below and 0.1 mass-% of Ca-stearate in a Hobert mixer at 60 min$^{-1}$ for 15 min. The stability of the polymers was measured by detecting the change of the melt flow index at 230 °C with a weight mass of 2.16 kg, after multiple extrusion (through the extruder of Plasticorder Brabender PLV 340; D = 19 mm; L = 25 D; 150 min$^{-1}$; temperatures 230 °C/240 °C/250 °C/260 °C). The obtained values of the melt flow index (MFI) (g/10 min, 230 °C) are set out in Table 4.

Table 4

| Stabilization system | MFI (g/10 min) | |
|---|---|---|
| | after 1 transition | after 5 transitions |
| (no stabilizer) | 3.9 | 9.8 |
| Pentaerythritol-tetrakis-[3(3,5-di-t-butyl-4-hydroxyphenyl)-propionate] | 3.0 | 5.5 |
| Component A alone | 2.8 | 5.3 |
| Component B alone | 2.3 | 4.1 |
| Stabilizer composition A + B (ratio A:B 1:2) | 1.7 | 2.3 |

5

**Example 4**

Into an unstabilized high-pressure polyethylene (MFI 0.3 g/10 min; density 0.923 g/cm$^3$) were introduced 0.2 mass-% of the stabilizers listed below on the measuring mixer W50H Plasticorder Brabender PLE 331 at a temperature of 180 °C and 45 min$^{-1}$. The thermal stability of the polymers was measured by detecting the time necessary for a decrease of the relative viscosity of the melt to half the original value, $\tau_{1/2}$(min). The results obtained are set out in Table 5.

Table 5

| Stabilization system | $\tau_{1/2}$ (min) |
|---|---|
| (no stabilizer) | 12 |
| Component A alone | 103 |
| Component B alone | 187 |
| Stabilizer composition A + B (ratio A:B 1:3) | 262 |
| Distearylpentaerythritoldiphosphite | 155 |

**Example 5**

A linear low-density polyethylene (LLDPE) (MFI 1.4 g/10 min; density 0.919 g/cm$^3$) containing 0.2 mass-% of the stabilizers listed below was degraded in the measuring mixer W50H Plasticorder Brabender PLE 331 at a temperature of 200 °C and 50 min$^{-1}$ with access of air. The thermal stability of the polymers was measured by detecting the time necessary for a decrease of the relative viscosity of the melt to half the original value, $\tau_{1/2}$ (min). The results obtained are summarized in Table 6.

Table 6

| Stabilization system | $\tau_{1/2}$ (min) |
|---|---|
| (no stabilizer) | 60 |
| Component A alone | 80 |
| Component B alone | 109 |
| Stabilizer composition A + B (ratio A:B 1:1) | 130 |
| Stabilizer composition A + B (ratio A:B 1:19) | 114 |
| Bis(2,4-di-t-butylphenyl)-pentaerythritoldiphosphite | 110 |

**Example 6**

Into a low-pressure high-density polyethylene (MFI 6 g/min; density 0.962 g/cm$^3$) were introduced the stabilizers listed below under the same conditions as in the example 5 in an amount of 0.05 mass-%. The thermal stability was measured by detecting the time necessary for a decrease of the relative viscosity of the melt of the polymers to its half value $\tau_{1/2}$ (min). The results obtained are set out in Table 7.

Table 7

| Stabilization system | $\tau_{1/2}$ (min) |
|---|---|
| (no stabilizer) | 44 |
| Component A | 55 |
| Component B | 115 |
| Stabilizer composition A + B (ratio A:B 1:1) | 260 |

**Example 7**

Into a high-molecular polyethylene (MFI 0.14 g/10 min; density 0.939 g/cm$^3$) were introduced the stabilizers listed below in an amount of 0.1 mass-% on a planetary mixer at laboratory temperature. The mixtures were exposed to strain by repeated transitions through an extruder (laboratory extruder CAMIL; D = 25 mm; L = 20 D; 50 min$^{-1}$; temperatures 200 °C/260 °C/250 °C). The values of MFI (g/10 min), measured by means of an extrusion plastometer (VP 05) at 190 °C and with the weight mass of 43.03 N are summarized in Table 8.

Table 8

| Stabilization system | MFI (g/10 min) | |
|---|---|---|
| | after 1 transition | after 10 transitions |
| (no stabilizer) | 0.22 | 0.30 |
| Component A | 0.16 | 0.25 |
| Component B | 0.12 | 0.15 |
| Stabilizer composition A + B (ratio A:B 1:1) | 0.10 | 0.12 |

**Claims**

1. Stabilizer composition for polymer materials, characterized by a mixture of
   (A) 2-t-butyl-4-($\alpha,\alpha'$-dimethylbenzyl)-phenol and
   (B) bis(2-t-butyl-4-($\alpha,\alpha'$-dimethylbenzyl)-phenyl)-pentaerythritoldiphosphite.

2. Stabilizer composition according to claim 1, consisting of 0.5 to 50.0 mass-% of component A and 50.0 to 99.5 mass-% of component B, the sum of the percentages of components A and B being 100 mass-%.

3. Stabilized polymer materials, particularly polyolefines, characterized in that they comprise the stabilizer composition according to claim 1 or 2.

4. Stabilized polymer materials according to claim 3, characterized in that they comprise 0.01 to 1.0 mass-% of the stabilizer composition according to claim 1 or 2, based on the mass of basic polymer material to be stabilized.

5. Stabilized polymer materials according to claim 3 or 4, characterized in that they comprise 0.05 to 0.5 mass-% of the stabilizer composition according to claim 1 or 2, based on the mass of the basic polymer material.

6. Stabilized polymer materials according to one of claims 3 to 5, characterized in that they comprise other additives, such as antioxidants, light stabilizers, UV stabilizers, pigments, colorants, flame retarders and/or fillers, and the like.

7. A method for stabilizing polymer materials,
   characterized by introducing a stabilizer composition according to claim 1,
   into the polymer material to be stabilized or into the respective monomer or prepolymer mixture before or during polymerization.

8. The method according to claim 7, characterized by introducing a stabilizer composition according to claim 2, into the polymer material to be stabilized or the respective monomer or prepolymer system in an amount of 0.01 to 1.0 and particularly of 0.05 to 0.5 mass-%, based on the mass of the basic polymer material to be stabilized.

9. The method according to claim 7 or 8, characterized in that the components A and B are introduced separately or in the form of a mixture into the polymer material.

**10.** The method according to one of claims 7 to 9, characterized in that the components A and B or a mixture of components A and B are introduced into the polymer material during production or processing to final products.

**Patentansprüche**

**1.** Stabilisatorzusammensetzung für Polymermaterialien, gekennzeichnet durch ein Gemisch von

    (A) 2-t-Butyl-4-($\alpha,\alpha'$-dimethylbenzyl)-phenol

    mit

    (B) Bis(2-t-butyl-4-($\alpha,\alpha'$-dimethylbenzyl)-phenyl)-pentaerythritdiphosphit.

**2.** Stabilisatorzusammensetzung nach Anspruch 1, bestehend aus 0,5 bis 50,0 Masse-% Komponente A und 50,0 bis 99,5 Masse-% Komponente B, wobei die Summe der Prozentanteile der Komponenten A und B 100 Masse-% beträgt.

**3.** Stabilisierte Polymermaterialien, insbesondere Polyolefine, dadurch gekennzeichnet, daß sie die Stabilisatorzusammensetzung nach Anspruch 1 oder 2 enthalten.

**4.** Stabilisierte Polymermaterialien nach Anspruch 3, dadurch gekennzeichnet, daß sie 0,01 bis 1,0 Masse-% Stabilisatorzusammensetzung nach Anspruch 1 oder 2, bezogen auf die Masse des zu stabilisierenden Grundpolymermaterials, enthalten.

**5.** Stabilisierte Polymermaterialien nach Anspruch 3 oder 4, dadurch gekennzeichnet, daß sie 0,05 bis 0,5 Masse-% Stabilisatorzusammensetzung nach Anspruch 1 oder 2, bezogen auf die Masse des Grundpolymermaterials, enthalten.

**6.** Stabilisierte Polymermaterialien nach einem der Ansprüche 3 bis 5, dadurch gekennzeichnet, daß sie weitere Additive, wie Antioxidantien, Lichtstabilisatoren, UV-Stabilisatoren, Pigmente, Färbemittel, flammhemmende Mittel und/oder Füllstoffe und dergleichen, enthalten.

**7.** Verfahren zur Stabilisierung von Polymermaterialien, gekennzeichnet durch Einbringen einer Stabilisatorzusammensetzung nach Anspruch 1 in das zu stabilisierende Polymermaterial oder in das entsprechende Monomer- oder Präpolymergemisch vor oder während der Polymerisation.

**8.** Verfahren nach Anspruch 7, gekennzeichnet durch Einbringen einer Stabilisatorzusammensetzung nach Anspruch 2 in das zu stabilisierende Polymermaterial oder das entsprechende Monomer- oder Präpolymersystem in einer Menge von 0,01 bis 1,0 Masse-% und insbesondere 0,05 bis 0,5 Masse-%, bezogen auf die Masse des zu stabilisierenden Grundpolymermaterials.

**9.** Verfahren nach Anspruch 7 oder 8, dadurch gekennzeichnet, daß die Komponenten A und B getrennt oder in Form eines Gemischs in das Polymermaterial eingebracht werden.

**10.** Verfahren nach einem der Ansprüche 7 bis 9, dadurch gekennzeichnet, daß die Komponenten A und B oder ein Gemisch der Komponenten A und B während der Herstellung oder der Verarbeitung zu Endprodukten in das Polymermaterial eingebracht werden.

**Revendications**

**1.** Composition de stabilisant pour matières polymères, caractérisée par un mélange de

    (A) 2-t-butyl-4-($\alpha,\alpha'$-diméthylbenzyl)-phénol

    et

    (B) diphosphite de bis(2-t-butyl-4-($\alpha,\alpha'$-diméthylbenzyl)-phényl)-pentaérythritol.

**2.** Composition de stabilisant selon la revendication 1, constituée de 0,5 à 50,0 % en masse du composant A et de 50,0 à 99,5 % en masse du composant B, la somme des pourcentages des composants A et B étant de 100 % en masse.

3. Matières polymères stabilisées, notamment polyoléfines, caractérisées en ce qu'elles comportent la composition de stabilisant selon la revendication 1 ou 2.

4. Matières polymères stabilisées selon la revendication 3, caractérisées en ce qu'elles comportent de 0,01 à 1,0 % en masse, par rapport à la masse de la matière polymère de base, de la composition selon la revendication 1 ou 2.

5. Matières polymères stabilisées selon la revendication 3 ou 4, caractérisées en ce qu'elles comportent de 0,05 à 0,5 % en masse, par rapport à la masse de la matière polymère de base, de la composition selon la revendication 1 ou 2.

6. Matières polymères stabilisées selon l'une des revendications 3 à 5, caractérisées en ce qu'elles comportent d'autres additifs, tels que antioxydants, stabilisants à la lumière, stabilisants aux U.V., pigments, colorants, retardateurs de flamme et/ou charges, ou analogues.

7. Procédé pour stabiliser des matières polymères, caractérisé par l'introduction d'une composition de stabilisant selon la revendication 1 dans la matière polymère à stabiliser, ou dans le mélange de monomère ou prépolymère respectif avant ou pendant la polymérisation.

8. Procédé suivant la revendication 7, caractérisé par l'introduction d'une composition de stabilisant selon la revendication 2 dans la matière polymère à stabiliser ou dans le système monomère ou prépolymère respectif en quantité de 0,01 à 1,0 et notamment de 0,05 à 0,5 % en masse par rapport à la masse de la matière polymère de base à stabiliser.

9. Procédé suivant la revendication 7 ou 8, caractérisé en ce que les composants A et B sont introduits séparément ou sous la forme d'un mélange dans la matière polymère.

10. Procédé suivant l'une des revendications 7 à 9, caractérisé en ce que les composants A et B ou un mélange des composants A et B sont introduits dans la matière polymère pendant la production ou la mise en oeuvre des produits finaux.